# EUROPÄISCHE PATENTSCHRIFT

(11) **EP 3 097 962 B1**
(45) Veröffentlichungstag und Bekanntmachung des Hinweises auf die Patenterteilung: **13.05.2020**
(21) Anmeldenummer: 15169999.8
(22) Anmeldetag: 29.05.2015
(51) Int. Cl.: B01D 1/18, B01J 2/16, B01J 2/28, B01J 2/04, A23P 10/22, A23P 10/40, A23L 27/00

(54) **VORRICHTUNG ZUR HERSTELLUNG VON SPRÜHGETROCKNETEN AGGLOMERATEN**
DEVICE FOR MAKING SPRAY-DRIED AGGLOMERATES
DISPOSITIF POUR LA PREPARATION D'AGGLOMERATS PAR SÉCHAGE PAR PULVERISATION

(43) Veröffentlichungstag der Anmeldung: 30.11.2016
(73) Patentinhaber: Symrise AG, 37603 Holzminden (DE)
(72) Erfinder: Weißbrodt, Jenny, 37603 Holzminden (DE); Diring, Alexander, 37603 Holzminden (DE); Gruber, Eric, 37603 Holzminden (DE); Hoffmann, Marc, 37632 Eschershausen (DE); Balde, Alexander, 37627 Stadtoldendorf (DE); Silbernagel, Alexander, 37688 Beverungen (DE); Vorat, Viktor, 37639 Bevern (DE)
(74) Vertreter: Fabry, Bernd

(56) Entgegenhaltungen:
- EP-A1- 0 420 509
- WO-A1-90/14143
- WO-A1-96/11580
- WO-A1-2007/050075
- WO-A1-2007/124745
- WO-A1-2013/011148
- DE-A1- 2 050 356
- DE-A1- 4 304 405
- DE-A1- 19 545 986
- DE-A1- 19 927 537
- DE-A1-102004 024 680
- GB-A- 1 486 768
- US-A- 5 044 093
- US-A1- 2007 190 228
- JINAPONG ET AL: "Production of instant soymilk powders by ultrafiltration, spray drying and fluidized bed agglomeration", JOURNAL OF FOOD ENGINEERING, BARKING, ESSEX, GB, vol. 84, no. 2, 7 August 2007 (2007-08-07) , pages 194-205, XP022188246, ISSN: 0260-8774, DOI: 10.1016/J.JFOODENG.2007.04.032

## Beschreibung

### GEBIET DER ERFINDUNG

Die Erfindung befindet sich auf dem Gebiet der Vorrichtungen für die Sprühtrocknungs-Agglomeration von Partikeln, insbesondere von großen Agglomeratpartikeln.

### STAND DER TECHNIK

Große Partikel sind für die Anwendung im Nahrungsmittelbereich ein wichtiges Produkt. So werden beispielsweise Aromen in Partikelform, z.B. in Teebeuteln zur Abrundung des Geschmacksprofils dem Lebensmittel zugesetzt. Große Partikel, in Form von großen Agglomeratpartikeln sind zumeist mit Verfahren herstellbar, die in der Herstellung teuer sind, oder die nur geringere Beladungen bis ca. 6 % erlauben.

Die Sprühtrocknung stellt ein gängiges Verfahren für die Herstellung von Partikeln im Lebensmittelbereich dar, das zudem eine hohe Beladung der getrockneten Partikel bis 30 % erlaubt. Ein Nachteil der Sprühtrocknung ist die begrenzte Partikelgröße, die sich im Rahmen von ca. 70 - 100 µm bewegt.

Sprühtrocknungsanlagen mit einem Fliess- oder Wirbelbett unterhalb der Sprühtrocknungseinrichtung sind zum Beispiel in den Dokumenten WO 2007/124745 A1, DE 199 27 537 A1, US 5,044,093 oder WO 90/14143 beschrieben.

Durch die Sprühbetttrocknung lassen sich beispielsweise größere Partikel erzeugen, deren Grenze jedoch bei etwa 200 µm liegt. Werden mit diesem Verfahren größere Partikel hergestellt, sind sie in der Regel mechanisch instabil und überstehen Mischprozesse, Transport und Dosage nicht ohne großen Abrieb und somit Bildung von Feinstaub.

Partikel mit Größen über 200 µm, die eine ausreichende mechanische Stabilität aufweisen, könnten die in der Herstellung teuren sprühgranulierten Partikel oder durch Schmelzextrusion hergestellten Partikel mit nur geringer Beladung ersetzen, oder das Angebot an Partikel für neue Märkte und Produkte sinnvoll ergänzen.

Partikel mit Größen über 200 µm, die eine ausreichende mechanische Stabilität aufweisen, könnten die in der Herstellung teuren sprühgranulierten Partikel oder durch Schmelzextrusion hergestellten Partikel mit nur geringer Beladung ersetzen, oder das Angebot an Partikel für neue Märkte und Produkte sinnvoll ergänzen.

Daher bestand die vorliegende Aufgabe darin eine Vorrichtung zu entwickeln, die es ermöglicht, große stabile Agglomeratpartikel, die größer als 200 µm, vorzugsweise größer als 300 µm, bevorzugt Agglomeratpartikel mit einer Größenordnung um 600 µm oder noch größer herzustellen. Die Vorrichtung soll möglichst ökonomisch fahren und der Prozess soll so gestaltet sein, dass die erhältlichen Agglomeratpartikeln eine verbesserte Produktqualität aufweisen. Vor allem sollen die großen Agglomeratpartikeln aus dem Prozess eine gute Beladung von Wirkstoffen, vorzugsweise Aromen aufweisen, und stabil sein. Insbesondere sollen die Wirkstoffe, die vorzugsweise Aromen sind, vor der Anwendung stabil im Partikel verbleiben. Die Vorrichtung soll so gestaltet sein, dass möglichst staubarme Agglomeratpartikel aus der Herstellung resultieren.

### BESCHREIBUNG DER ERFINDUNG

Gegenstand der Erfindung ist demgemäß eine Vorrichtung für die Sprühtrocknung-Agglomeration von Partikeln, wobei die Vorrichtung
(i) ein Sprühtrocknungsabschnitt (A) im oberen Bereich einer Kammer zum Trocknen von Beschickungsflüssigkeitspartikeln, die von einem Beschickungsflüssigkeitszerstäuber (Z1) gesprüht werden, aufweist,
(ii) ein integriertes Fließbett (B) im unteren Bereich der Kammer umfasst, in dem das Pulver vom Sprühtrocknungsabschnitt aus Schritt (i) mittels einer Düsen- oder Zerstäuberkonstruktion (Z2), das unten am Fließbett angebracht ist, mit einer Binderflüssigkeit besprüht wird,
(iii) eine Wehrkonstruktion (G) im Fließbett (B) umfasst, welche vor der Austrittöffnung (H) zum Zickzacksichter (P) platziert ist,
wobei die Partikel während der Herstellung ständig in Bewegung gehalten und aufgewirbelt werden und die Vorrichtung so konfiguriert ist, dass bei der Agglomeration entstehender Feinstaub im Sprühtrocknungs-Agglomerationsapparat durch den Zickzacksichter (P) in den Agglomerationsprozess zurückgeführt wird.

Anstatt die Agglomeration durch eine Pulverrückführung in den Prozess zu realisieren, wird eine Agglomeration ausschließlich im Fließbett durch die zusätzliche Einspeisung von geeigneten Binderflüssigkeiten erreicht. Überraschenderweise wurde gefunden, dass die so hergestellten Agglomeratpartikeln besonders groß werden. Es hat sich zudem gezeigt, dass die Integration einer Düsen- oder Zerstäuberkonstruktion (Z2), das unten am Fließbett (B) angebracht ist, besonders vorteilhaft zum Versprühen der Binderflüssigkeit ist. Es zeigte sich zudem, dass die ständige Zirkulation die Kollisionswahrscheinlichkeit der Partikel so begünstigt, dass in einem kurzen Zeitraum, große Agglomeratpartikel entstehen.

In einer bevorzugten Ausführungsform besteht die Düsen- oder Zerstäuberkonstruktion (Z1) im internen Fließbett (B) aus einer Anordnung aus mehreren einzeln angeordneten Düsen, die alle jeweils einzeln an eine Speiseleitung angeschlossen sind, aus der Binderflüssigkeit bzw. jede mögliche Flüssigkeit, die im Agglomerationsprozess benötigt wird versprüht wird. Die Speiseleitung ermöglicht zudem, dass jede Düse individuell mit jeder zu versprühenden Flüssigkeit belegt werden kann, so dass, je nachdem welche Agglomeratpartikel benötigt werden, die Zusammensetzung entsprechend hergestellt werden kann. Die Anzahl der Düsen ist abhängig von der Größe des Sprühturms und vom Produkt bzw. der zu erreichenden Produktqualität von 1 bis zu 12 Düsen verändert werden. Die Düsen können einzeln so eingestellt werden, dass Tröpfchenverteilungen der eingesprühten Binderflüssigkeit von einem sehr feinen Nebel bis hin zu relativ großen Tropfen erreicht werden. Dies wird erreicht durch Variation der Kappenstellung an den Düsen und die Variation des Zerstäubungsdruckes von 1-6 bar.

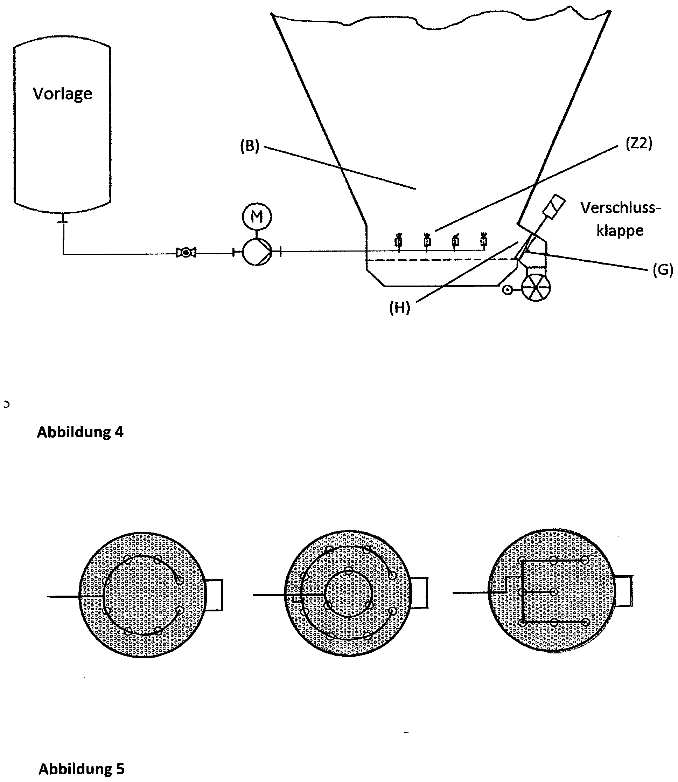

Insbesondere besteht in einer bevorzugte Ausführungsform die Düsen- oder Zerstäuberkonstruktion (Z2) im internen Fließbett (B), aus einer Ringleitung, entlang der Ringleitung in gleichmäßigen Abständen Düsen oder Zerstäuber platziert sind. Eine solche Konstruktion ist beispielhaft in Abbildung 4 wiedergegeben.

In einer weiteren bevorzugten Ausführungsform ist die Düsen- oder Zerstäuberkonstruktion (Z2) eine konzentrische Ringleitung oder eine gitterartige Konstruktion mit Düsen oder Zerstäubern. Ein wichtiger Aspekt ist die Gleichmäßigkeit der angebrachten Düsen- bzw. Zerstäuber. Bei der hier vorliegende beschriebene Düsen- oder Zerstäuberkonstruktion (Z2) können die Düsen bzw. Zerstäuber einzeln reguliert werden, so können z.B. Düsen- bzw. Zerstäuberdruck einzeln reguliert und eingestellt werden.

Diese Konstruktion weist den Vorteil auf, dass die im Fließbett zirkulierenden Partikeln mit einer großen Menge an Feuchtigkeit benetzt werden kann. Zudem unterstützt eine solche Ausgestaltung der Düsen- oder Zerstäuberkonstruktion (Z2) im internen Fließbett (B) die Fluidisierung, was ein Vorteil ist, um große Agglomeratpartikel zu erhalten.

In einer weiteren bevorzugten Ausführungsform umfasst die Düsen- oder Zerstäuberkonstruktion (Z2) mindestens 1 oder 2 oder 3 Düsen oder Zerstäuber, wobei die Düsen bzw. Zerstäuber, vorzugswiese wie oben beschrieben angeordnet sind und beispielhaft in Abbildung 4 wiedergeben sind.

In einer weiteren bevorzugten Ausführungsform umfasst die Düsen- oder Zerstäuberkonstruktion (Z2) mindestens 4 Düsen- oder Zerstäuber, wobei die Düsen bzw. Zerstäuber, vorzugswiese wie oben beschrieben angeordnet sind und beispielhaft in Abbildung 4 wiedergeben sind.

Die Menge an Binderflüssigkeit, die durch die so konstruierten Düsen bzw. Düsenanzahl auf ein Partikel einwirken kann, ermöglicht eine optimale Feuchtigkeitsaufnahme der Partikel. Die Partikel adsorbieren die Flüssigkeit dadurch besser. Durch die Prozessführung, insbesondere die Temperatur und Luftgeschwindigkeit im Fließbett, trocknen die Oberflächen der Partikel nur sehr langsam ab, bleiben also lange klebrig. Die so erhaltenen vergrößerten Haftflächen führen zu einer verstärkten Agglomeration der fluidisierten Partikel im Vergleich zu herkömmlichen Prozessen. Dadurch ergeben sich sehr große Agglomeratpartikel, die durch die vergrößerten Haftflächen auch eine erhöhte mechanische Stabilität aufweisen.

Die Kontaktfläche der zirkulierenden Partikeln zueinander wird dadurch nochmals vergrößert, und führt so zu einer Vergrößerung der Kotaktflächen der Partikeln, so dass sich schnell große Agglomeratpartikel ausbilden.

In einer weiteren bevorzugten Ausführungsform ist die Düsen- oder Zerstäuberkonstruktion (Z2) so konstruiert, dass die Binderflüssigkeit aus der Düsen- oder Zerstäuberkonstruktion (Z2) im internen Fließbett (B) von unten nach oben versprüht wird.

Die Konstruktion der Düsen- oder Zerstäuber in der erfindungsgemäßen Vorrichtung unterstützt insbesondere die Aufwärtsströmung der Partikel im Fließbett und so auch die Verteilung der Partikel im Fließbett, die dazu führt, dass die Wirbelschicht nicht kollabiert, sobald die Partikeln eine Größe von über 200 µm erreichen. Insbesondere ermöglicht die Zirkulation, die die Partikel ständig in Bewegung hält, eine große Kollisionswahrscheinlichkeit der Partikeln untereinander.

In einer weiteren bevorzugten Ausführungsform sind die Düsen oder Zerstäuber bei der Düsen- oder Zerstäuberkonstruktion (Z2) Drucksprühdüsen, vorzugsweise sind es Zweifluid-Sprühdüsen. Die Zerstäubung in der Wirbelschicht erfolgt vorzugsweise mit Zweistoffdüsen. Zweistoffdüsen bieten den Vorteil, dass sie sich durch den Zerstäubungsdruck selbst reinigen. Sie setzen sich daher während der Produktion nicht zu, was in der mit Produkt gefüllten Wirbelschicht leicht passieren könnte. Vorzugsweise werden Druckdüsen mit Wirbelkörper verwendet. Bevorzugt weisen die Düsen bzw. Zerstäuber einen Bohrungsdurchmesser ø von 0,5 bis 1,5 mm, vorzugsweise 0,7 bis 1,0 mm auf. Zweifluid-Sprühdüsen sind besonders vorteilhaft, da sie es ermöglichen zwei unterschiedliche Flüssigkeiten und/oder Gase durch die Düsen zu blasen bzw. ins Fließbett einzublasen. Demgemäß werden vorzugsweise Zweifluiddüsen verwendet, da die durch die Zweistoffdüsen eingebrachte Luft, die Aufwärtsströmung der Partikel fördert.

Die im Fließbett (B) befindlichen Düsen (Z2) werden einzeln mit Druckluft versorgt, die jeweils durch einen Druckminderer geregelt wird (Regel Bereich von 0-10 bar). Die Produkt- und Druckluftleitungen bestehen vorzugsweise aus Edelstahl und sind geerdet um ein sicheres Arbeiten zu gewährleisten.

Die Einspeisung des Binders im Fließbett erfolgt vorzugsweise mit 10 - 100 L/h bei 1 - 10 bar, vorzugsweise mit 20 - 80 L/h bei 1 bis 8 bar.

Das Zusammenspiel zwischen der Zirkulation der Partikel und den Einsatz der Düsen- oder Zerstäuberkonstruktion (Z2) ermöglicht zum einen, eine große Kollisionswahrscheinlichkeit der Partikel untereinander und gleichzeitig vergrößert es die Haftkontaktflächen der Partikeln, so dass große stabile Agglomeratpartikel daraus entstehen können.

Die erfindungsgemäß erhältlichen Agglomeratpartikeln weisen durch die Konstruktion und Führung der Düsen- oder Zerstäuber eine kompakte stabile Struktur auf und demgemäß geringe Staubwerte und Abriebwerte.

Die erfindungsgemäße Vorrichtung umfasst eine Wehrkonstruktion (G), welche ebenfalls im Fließbett (B) eingebaut und welche vor der Austrittöffnung (H) zum Zickzacksichter plaziert ist. Das Wehr dient zur Einstellung des Füllstandes des Fließbettes und zur regelmäßigen Abfuhr der Partikel und zur Einstellung der Verweilzeit der Partikel im Fließbett. Demgemäß übernimmt die Wehrkonstruktion in der erfindungsgemäßen Vorrichtung die Funktion einer Windsichtung (Windsichten). Windsichten ist ein mechanisches Trennverfahren, bei dem Partikel anhand ihres Verhältnisses von Trägheits- bzw. Schwerkraft zum Strömungs-widerstand in einem Gasstrom getrennt werden. Es ist ein Klassierverfahren (Trennverfahren in der Verfahrenstechnik) und nutzt das Prinzip der Schwer- oder Fliehkrafttrennung aus. Feine Partikel folgen der Strömung, grobe der Massenkraft.

Die Wehrkonstruktion vor der Austragsöffnung zum Zickzacksichter hat den Vorteil, dass zum einen, der Füllstand im Fließbett, und damit die Verweilzeit und somit die Partikelgröße reguliert werden kann, und zum anderen, ein Teil der Partikel sofort wieder in den Kopfraum des Sprühtrockners zurückgeführt wird. Sie durchlaufen somit den gesamten Prozess noch einmal. Im Kopfraum erfolgt die Bedüsung mit der Slurry, was zu einer ersten Agglomeration führt, unten in der Wirbelschicht werden die Partikel weiter aufagglomereriert, wodurch die Agglomeration gefördert und die Größe der Agglomeratpartikeln hier nochmals beeinflusst wird.

Die Wehrkonstruktion dient zudem zur Regulierung der Produktmenge im Fließbett so dass sichergestellt wird, dass eine ausreichende Menge an Partikeln im Fließbett vorhanden ist, damit eine Agglomeration auch erfolgen kann. Dies wiederum geschieht durch eine Menge an eingebrachter Binderflüssigkeit, die der Menge an Partikeln entspricht, wodurch verhindert wird, dass sich Verklumpungen bilden. Weiterhin kann durch das Wehr verhindert werden, dass zu viel Produkt im Fließbett vorliegt, so dass dieses nicht mehr fluidisiert werden kann.

In der erfindungsgemäßen Vorrichtung wird der bei der Sprühtrocknung und der Agglomeration durch Abrieb entstehender Feinstaub in der Vorrichtung durch den Zickzacksichter in den Kopfraum des Sprühturms zurückgeführt.

Die Rückführung des Feinstaubes in den Prozess hat den Vorteil, dass der Ausbeuteverlust minimiert wird sowie die Reduzierung des Feinstaubs im Prozess. Zusätzlich hat es den Vorteil, dass auch die Gefahr einer Staubexplosion reduziert bzw. minimiert wird.

In einer weiteren bevorzugten Ausführungsform der erfindungsgemäßen Vorrichtung beträgt die Eingangstemperatur am Beschickungszerstäuber (Z1) zwischen 100°C bis 220°C, die Ausgangstemperatur am Zickzacksichter (P) 20 °C bis 100°C, wobei der Slurrydurchsatz im Bereich von 300 bis 1200 kg/Stunde beträgt, und mit 30 bis 200 bar zerstäubt wird. Bevorzugt ist die Eingangstemperatur 190°C -200 °C und die Ausgangstemperatur 80°C-20°C, oder bei leichtflüchtigen Bestandteilen beträgt die Eingangstemperatur von 100-130°C und die Ausgangstemperatur von 50°C-70°C. Die Temperatureinstellungen sind hier nur beispielhaft aufgeführt und werden je nach Komponenten entsprechend eingestellt.

In einer weiteren bevorzugten Ausführungsform der erfindungsgemäßen Vorrichtung beträgt die Temperatur im Fließbett während der Agglomeration zwischen 5-90°C.

Die nach dem erfindungsgemäßen Verfahren erhältlichen Agglomeratpartikel sind größer als 200 µm. Vorzugsweise sind die nach dem erfindungsgemäßen Verfahren erhältlichen Agglomeratpartikel größer als 300 µm und können bis 1000 µm groß werden. Bevorzugt weisen erfindungsgemäße Agglomerationspartikel eine Größe zwischen 300 µm und 800 µm, bevorzugt zwischen 400 µm und 700 µm. Die Größe der Agglomerationspartikel wird jedoch nach Anwendungsbereich variiert, so dass die hier genannten Agglomerationspartikelgrößen keine Einschränkung darstellen sollen, sondern lediglich eine beispielhafte Ausführung der möglichen Agglomeratgrößen darstellen.

Die Herstellung der Agglomeratpartikel mittels der erfindungsgemäßen Vorrichtung unterliegt üblicherweise den Prozessparametern, wie Temperatur, Druck, Strömung etc. Idealerweise lassen sich stabile große Agglomeratpartikel mit guten Schüttgewichten, Fließfähigkeitswerten und geringen Staubwerten, herstellen, in dem die oben genannten Temperaturen eingestellt werden. Demgemäß können die zur Herstellung von Agglomeratpartikeln eingestellte Parameter je nach benötigtem Agglomerat variieren, so dass die vorstehenden Parameter Richtwerte sind, die nicht einschränkend sein sollen.

Besonders wichtig ist hier bei der Herstellung von großen Agglomeratpartikeln, dass die Luft im internen Fließbett so eingestellt werden muss, dass die Partikel fluidisieren und eine gleichmäßige Verteilung im Bett aufweisen. Daher ist die Düsen- oder Zerstäuberkonstruktion (Z2) ein wichtiger Aspekt. Ebenso ist die Regulierung der Produktmenge im Fließbett ein essentieller Aspekt, dass die Herstellung von großen Partikeln beeinflusst. Weiterhin sind die Temperaturen am Eingang und Ausgang des Fließbettes so zu regulieren, dass eine Agglomeration möglich ist, d.h. vorzugsweise bei nicht zu heißen Temperaturen, damit der Binder nicht direkt trocknet und so die Partikel nicht verkleben können und auch nicht zu kalten Temperaturen, da sonst das Produkt nass wird und die Partikel verklumpen würden und die Wirbelschicht zusammenbräche (Nassverfahren).

Weiter beschrieben wird die Verwendung von Agglomeratpartikel, die durch die erfindungsgemäße Vorrichtung hergestellt werden, zur Herstellung von Nahrungs- bzw. Lebensmittelprodukten.

Ferner ist ein weiterer Aspekt die Verwendung von Agglomeratpartikel, die durch die erfindungsgemäße Vorrichtung hergestellt werden, als Aromapartikel, vorzugsweise zum Aromatisieren von Nahrungs- bzw. Lebensmittelprodukten.

Der Begriff "Lebensmittel" bzw. "Nahrungsmittel" umfasst insbesondere Produkte, die gemäß der VERORDNUNG (EG) Nr. 178/2002 DES EUROPÄISCHEN PARLAMENTS UND DES RATES vom 28. Januar 2002 Lebensmittel sind. Gemäß dieser Verordnung sind "Lebensmittel" alle Stoffe oder Erzeugnisse, die dazu bestimmt sind oder von denen nach vernünftigem Ermessen erwartet werden kann, dass sie in verarbeitetem, teilweise verarbeitetem oder unverarbeitetem Zustand von Menschen aufgenommen werden.

Weiter beschrieben wird die Verwendung der erfindungsgemäß erhältlichen Agglomeratpartikel zur Herstellung von Nahrungs- bzw. Lebensmittelprodukten.

Die erfindungsgemäß erhältlichen Agglomeratpartikeln sind vorzugsweise Zwischenprodukte und können in Endprodukten im Lebensmittelbereich eingesetzt werden, bevorzugt als Aroma-Agglomeratpartikeln. Vorzugsweise handelt es sich bei dem Lebensmittel beispielsweise um Backwaren, beispielsweise Brot, Trockenkekse, Kuchen, sonstiges Gebäck, Dauerbackwaren oder Snacks wie beispielsweise Kräcker, Laugengebäck, Kekse, Kartoffel- oder Maischips (z. B. Tortilla-Chips), Weizenmehlprodukte, (z. B. Gebäckstangen, Croutons, Brotchipse, Zwieback, extrudierte und nicht-extrudierte Knäckebrote) Süßwaren (beispielsweise Schokoladen, Schokoladenriegelprodukte, sonstige Riegelprodukte, Fruchtgummi, Hart- und Weichkaramellen, Kaugummi), alkoholische oder nicht-alkoholische Getränke (beispielsweise Kaffee, Tee, Eistee, Wein, weinhaltige Getränke, Bier, bierhaltige Getränke, Liköre, Schnäpse, Weinbrände, (carbonisierte) fruchthaltige Limonaden, (carbonisierte) isotonische Getränke, (carbonisierte) Erfrischungsgetränke, Nektare, Schorlen, Obst- und Gemüsesäfte, Frucht- oder Gemüsesaftzubereitungen, "Instant" Produkten, wie Instantgetränke (beispielsweise Instant-Kakao-Getränke, Instant-Tee-Getränke, Instant-Kaffeegetränke, Instant-Fruchtgetränke), Fleischprodukte (beispielsweise Schinken, Frischwurst- oder Rohwurstzubereitungen, gewürzte oder marinierte Frisch- oder Pökelfleischprodukte), Eier oder Eiprodukte (Trockenei, Eiweiß, Eigelb), Getreideprodukte (beispielsweise Frühstückscerealien, Müsliriegel, vorgegarte Fertigreis-Produkte), Milchprodukte (beispielsweise Milchgetränke, Buttermilchgetränke, Milcheis, Joghurt, Kefir, Frischkäse, Weichkäse, Hartkäse, Trockenmilchpulver, Molke, Molkegetränke, Butter, Buttermilch, teilweise oder ganz hydrolisierte Milchprotein-haltige Produkte), Produkte aus Sojaprotein oder anderen Sojabohnen-Fraktionen (beispielsweise Sojamilch und daraus gefertigte Produkte, Fruchtgetränke mit Sojaprotein, Sojalecithin-haltige Zubereitungen, fermentierte Produkte wie Tofu oder Tempe oder daraus gefertigte Produkte), Produkte aus anderen pflanzlichen Proteinquellen, beispielsweise Haferprotein-Getränke, Fruchtzubereitungen (beispielsweise Konfitüren, Fruchteis, Fruchtsoßen, Fruchtfüllungen), Gemüsezubereitungen (beispielsweise Ketchup, Soßen, Trockengemüse, Tiefkühlgemüse, vorgegarte Gemüse, eingekochte Gemüse), Knabberartikel (beispielsweise gebackene oder frittierte Kartoffelchips oder Kartoffelteigprodukte, Extrudate auf Mais- oder Erdnussbasis), Produkte auf Fett- und Ölbasis oder Emulsionen derselben (beispielsweise Mayonnaise, Remoulade, Dressings), sonstige Fertiggerichte und Suppen (beispielsweise Trockensuppen, Instant-Suppen, vorgegarte Suppen), Gewürze, Würzmischungen sowie insbesondere Aufstreuwürzungen (englisch: Seasonings), die beispielsweise im Snackbereich Anwendung finden.

### HERSTELLBEISPIELE

### Herstellung von Agglomeratpartikeln

Es werden Agglomeratpartikeln mit Aromabeladung hergestellt. Dazu werden Primärpartikel in der oberen Kammer der Apparatur mittels Sprühtrocknung hergestellt, die dann im unteren Teil der Apparatur mit Binderflüssigkeit besprüht werden. Hierbei wird sichergestellt, dass dem Fließbett stets eine ausreichende Menge an Primärpartikeln zugeführt wird, um den Prozess aufrecht zu erhalten.

Die Eingangsluft im Turm beträgt 160 - 200 °C. Die Temperatur im Fließbett wird auf 30 - 50 °C gedrosselt, damit die Primärpartikel genug Zeit haben durch die eingesprühte Dispersion zu agglomerieren. Zu hohe Temperaturen würden hier zu hohen Trockenraten führen, wodurch die eingesprühte Dispersion auf den Partikeloberflächen antrocknen könnte, bevor eine Agglomeration stattgefunden hat.

Der Prozess wird ansonsten unter Normalbedingungen angefahren, bis das Fließbett bis zu einem turmspezifischen Grad gefüllt ist. Das wird erreicht, indem zunächst das Wehr geschlossen wird. Dann erfolgt die Einspeisung der "Binderflüssigkeit" im Fließbett und das Wehr wird geöffnet. Diese Suspension kann entweder aus der Slurry selbst bestehen oder falls eine zusätzliche Versiegelung der Partikeloberflächen erwünscht ist und eine hohe mechanische Stabilität nötig ist mit niedermolekularen Substanzen mit guter Haftwirkung wie z.B. Dextrose, Sorbitol, Mannitol usw. versetzt sein. Auch eine Benetzung mit Wasser oder Wasserdampf ist je nach gewünschten Partikeleigenschaften möglich.

Bei den Düsen aus der die Binderflüssigkeit ins Bett versprüht wird handelt es sich um Zweistoffdüsen mit kleinen Bohrungen, die einen möglichst feinen Sprühnebel im Fließbett erzeugen. Die über diese Düsen eingetragenen Luftströme tragen zur Fluidisierung der Partikel bei und sorgen für eine gleichmäßige Benetzung der Partikel und somit eine steuerbares Agglomeration ohne Verklumpungen.

Zeichnung 1 verdeutlicht die Position der einzelnen technischen Vorrichtungsmerkmale in einer Agglomeration-Sprühtrocknungs-Apparatur für die Herstellung der erfindungsgemäßen großen Agglomeratpartikel.

### Auswirkung der Düsen- bzw. Zerstäuberkonstruktion auf Agglorneratpartikeln

Es wurden Agglomeratpartikeln hergestellt, wobei die Wirkung der Düsen- bzw. Zerstäuberkonstruktion (z) im internen Fließbett (b) auf die Agglomerate getestet wurde. Die Ergebnisse sind in der folgenden Tabelle zu entnehmen.

**Tabelle 1:**

| Ergebnisse mit unterschiedlichen Düsen- bzw. Zerstäuberkonstruktionen | | | |
|---|---|---|---|
| **Düsen- bzw. Zerstäuberkonstruktion** | **Zerstäubungsdruck im Fließbett** | **Volumenstrom im Fließbett** | **Beobachtung** |
| 1 Düse (Versuchsturm) | 0,5-2 bar | 0,5-3 L/h | Große stabile Agglomerate |
| 4 Düsen | 3-6 bar | 30-80 L/h | Stabile Agglomerate, Verteilung im Fließbett gut |
| Ringleitung mit 6-8 Düsen | 3-6 bar | 30-80 L/h | Große stabile Agglomerate, gleichmäßige Zerstäubung im Fließbett |
| Doppel-Ringleitung mit 3 Düsen im Innenring und 6 Düsen im Außen ring | 3-6 bar | 30-80 L/h | Große stabile Agglomerate, nochmals bessere Verteilung |

Je kleiner der Druck desto größer die Tropfen und desto ungleichmäßiger die Tröpfchenverteilung. Dies kann zu einer schnelleren Agglomeration führen. Es besteht aber die Gefahr, dass die Düsen sich bei geringerem Druck nicht mehr freiblasen (sich also zusetzen), dass die Dichte der Partikel zu schnell zunimmt und die Partikel nicht genug aufgewirbelt werden und die Wirbelschicht somit zusammenbricht. Der Druck muss demgemäß sowohl der Zufuhr an Primärpartikeln als auch der eingespeisten Menge an Binderflüssigkeit angepasst werden Diese Optimierung ist für jede Konfiguration (Turm, Fließbettgröße, Durchsatz Primärpartikel, etc.) durchzuführen.

### Dichte und Strukturbestimmung der Agglomeratpartikeln

### I) Partikelgröße der Agglomeratpartikeln

Die Partikelgrößen der erfindungsgemäß hergestellten Agglomerate wurden mittels einer Messung durch Laserbeugung bestimmt.

Das Prinzip der Laserbeugung ist eine ausgesprochen flexible Technik, mit der Möglichkeit prinzipiell die Größe von jedem Material in einem anderen zu messen. Die einzigen Bedingungen der Technik sind, dass sich jede Phase von der anderen optisch abgrenzt und das Medium transparent für die Laserwellenlänge ist. Das bedeutet, dass sich der Brechungsindex von Material und vom umgebenden Medium unterscheiden muss.

Die Messung erfolgt durch Einbringen der Probe in den Laserstrahl durch die entsprechenden Module für Pulver oder Emulsionen/ Suspensionen. Das von den Partikeln gestreute Licht wird detektiert. Die gesamte Laserleistung, die auf dem Weg aus diesem System gelenkt wird, wird gemessen und erlaubt auch Rückschlüsse auf die Probenkonzentration.

Das hier verfügbare Gerät (Malvern Mastersizer 2000 mit Scirocco-Trockeneinheit) bietet die Möglichkeit Pulver bis max. 2mm Partikelgrösse zu messen. Dabei kann ein Dispersionsdruck zum Einziehen des Pulvers von 0 bis 4 bar angewendet werden. Es ist jedoch darauf zu achten, dass das Produkt dabei nicht zerstört wird, da es mit dem eingestellten Druck beim Einziehen gegen eine Prallplatte gesaugt wird.

### II) Strukturbestimmung der Agglomeratpartikeln

Die Struktur der erfindungsgemäß hergestellten Agglomerate wurde mittels einer Lupe (Fa. Will mit Kamera) auf einer schwarzen Probenplatte bestimmt.

Zur besseren Erkennung von Strukturen getrockneter Aromen oder Zusammensetzung von Applikationen wie z.B. aromatisierten Teemischungen setzt man eine Lupe ein. Hier kann eine Probe mit einer Vergrößerung zwischen 7- und 45fach analysiert werden.

Zeichnung 1 und Zeichnung 2 zeigen die erfindungsgemäß hergestellten Agglomeratpartikeln im Vergleich zu Agglomeraten, die nach dem gängigen Verfahren hergestellt werden. Die mikroskopischen Bilder verdeutlichen, dass die erfindungsgemäß hergestellten Partikeln teilweise mehr als doppelt so groß (ca. 600 µm und größer) sind als die Standard-Partikel. Sie weisen gleichzeitig eine deutlich dichtere und somit stabilere Struktur auf.

Zeichnung 1 und Zeichnung 2 zeigen die erfindungsgemäß hergestellten Agglomeratpartikeln im Vergleich zu Agglomeraten, die nach dem gängigen Verfahren hergestellt werden. Die mikroskopischen Bilder verdeutlichen, dass die erfindungsgemäß hergestellten Partikeln teilweise mehr als doppelt so groß (ca. 600 µm und größer) sind als die Standard-Partikel. Sie weisen gleichzeitig eine deutlich dichtere und somit stabilere Struktur auf.

Die Ergebnisse sind in Tabelle 1 wiedergegeben.

### Abriebfestigkeit von Trockenprodukten

Der Abriebtest wurde mittels eines Friabilators durchgeführt.

Bei dieser Analysenmethode wird die mechanische Stressung nachgestellt, der ein Produkt beim Transport und bei der Weiterverarbeitung ausgesetzt ist.

Das Produkt erfährt im Haufwerk während der Analyse eine Rotationsbewegung und einen freien Fall, so dass instabile Produkte brechen oder an eventuellen Kanten abgerieben wer-den können. Der entstandene Abrieb ist ein Feinanteil, der das eigentliche Produkt verfälscht bzw. für die Weiterverarbeitung nicht verwendet werden kann

Der Abriebtest mittels Friabilator wurde unter folgenden Bedingungen durchgeführt:

| Intensität | Dauer | Einwaage |
|---|---|---|
| Stufe 3 | 10 Min | 50g |

Es ist zu erkennen, dass sich die Partikelgröße durch die Reibung bei allen Mustern auch bei den mechanisch sehr stabilen Standardpartikeln verringert. Jedoch ist auch zu erkennen, dass selbst nach der starken mechanischen Beanspruchung der d(50)µm der erfindungsgemäß hergestellten Partikel noch im Bereich von 300 - 600 µm liegt (siehe Tabelle 2).

### Bestimmung der Fließfähigkeit der Agglomeratpartikel

Die Fliessfähigkeit der Agglomeratpartikeln wurden mittels einem Gerät Powder Flow Analyser bestimmt. Diese Methode ermöglicht die Messung der Fließfähigkeit von Pulvern

Die Pulverprobe wird dazu in einen zylindrischen Behälter gegeben. Dann wird der Rührer mit seinen schrägen Rührblättern rotierend durch die Probe auf- und abgeführt. Dies geschieht in einem definierten Winkel und mit definierter Geschwindigkeit. Aus dem Widerstand des Pulvers kann dann der FFC- Wert, ein Maß für die Fließfähigkeit errechnet werden.

Die Fließfähigkeit ist für Umfüll- und Dosierprozesse in der Produktion oder beim Kunden ein wesentliches Kriterium.

Der Vorteil dieser Messmethode ist die Möglichkeit auch nicht freifließende Pulver mit einem Wert zu charakterisieren, was bei herkömmlichen Methoden wie dem Schüttwinkel nicht möglich ist.

Die Fließfähigkeit der Agglomerate wurde als FFC-Wert gemessen.
Es gilt die folgende FFC-Skalierung:

| | |
|---|---|
| 0 < FFC < 11 | frei fließend |
| 11< FFC < 14 | leicht fließend |
| 14 < FFC < 16 | kohäsiv |
| 16 < FFC < 19 | sehr kohäsiv |
| FFC > 19 | härtend |

In Tabelle 1 ist zu erkennen, dass alle erfindungsgemäß hergestellten Agglomerate als frei fließend eingeordnet werden können.

### Bestimmung der Staubwerte der Agglomerat Partikel

Die Staubwerte der hergestellten Agglomerate wurden mit einem SP3-Staubmessgerät nach der Fallmethode nach DIN 55992-2 bestimmt.

Eine definierte Menge Probensubstanz wird in das Beschickungssystem eines senkrechten Fallrohres gegeben. Nach schlagartigem Öffnen des Beschickungssystems fällt die Probe in dem Rohr zu Boden. Treffen die Partikel auf die Bodenplatte, so bleiben einige Partikel liegen und andere gelangen als Schwebstaub in die Aufprallzone direkt oberhalb der Bodenplatte. In dieser Aufprallzone wird mit einer Laser-Lichtquelle und einer Fotozelle die Licht Extinktion über einen definierten Zeitraum (30 sec) gemessen. Die Extinktion ist ein Maß für das Staub verhalten der Probe.

Die Staubentwicklung spielt z.B. in der Produktion eine große Rolle, da es dadurch zu Kreuz-Kontaminationen oder auch gesundheitlichen Beeinträchtigungen der Mitarbeiter führen kann. Auch bei Abfüllprozessen darf nahezu kein Staub entstehen, da sonst Verpackungen nicht richtig verschweißt oder Etiketten richtig geklebt werden können.

Es gilt die folgende Staubwert-Skalierung:

| | |
|---|---|
| 500 | extrem hohe Staubwerte |
| 150 | sehr hohe Staubwerte |
| 30 | normaler Staubwerte |
| 5 | geringer Staubwerte |
| < 2 | extrem geringe Staubwerte |

Die erfindungsgemäß hergestellten Agglomeratpartikeln weisen extrem geringe Staubwerte auf, die nach den oben aufgeführten Grenzen kohäsive Produkte erwarten lassen würden. Im Zusammenhang mit den Fießfähigkeitsmessungen kann jedoch ausgeschlossen werden, dass die Pulver kohäsiv sind, sie sind nur ungewöhnlich staubarm. Die Agglomerate der Vergleichspartikel weisen alle einen höheren Staubwert auf (Tabelle 1).

**Tabelle 2**

| Zusammenfassung der Ergebnisse | | | | | | | |
|---|---|---|---|---|---|---|---|
| **Agglomerat** | **Beladung** | **Dichtemessung** | | | **FFC** | **Staubwert** | **Schüttgewicht** |
| | | **d(0,1)µm** | **d(0,5)µm** | **d(0,9)µm** | | | |
| 1 | Pilzaroma E* | 96 | 388 | 952 | 13,6 | 0,61 | 410g/l |
| 2 | Mangoaroma E* | 127 | 397 | 856 | 10 | 1,85 | 350g/l |
| 3 | Pfirsicharoma E* | 177 | 758 | 1443 | 11,2 | 0,08 | 450g/l |
| 4 | Zitronenaroma E* | 266 | 651 | 1288 | 12,7 | 1,24 | 430g/l |
| 5 | Zitronenaroma E* | 270 | 509 | 910 | 11,9 | 3,08 | 580g/l |
| 6 | Himbeere E* | 120 | 418 | 1130 | 8,9 | 1,11 | 480g/l |
| | | | | | | | |
| 7 | Bergamotte A | 131 | 362 | 745 | 14 | 34,8 | 460g/l |
| 8 | Bergamotte_V * | 420 | 580 | 799 | 13,3 | 19,3 | 720g/l |
| 9 | Pfirsicharoma A | 42 | 146 | 308 | 10 | 20 | 330g/l |
| 10 | IrishCream_V* | 462 | 633 | 869 | 12,8 | 4,65 | 660g/l |

Mit Ausnahme von Agglomerat 5, das gemäß der erfindungsgemäßen Vorrichtung im Produktionsturm hergestellt wurde, wurden die Agglomerate 1-4 sowie 6 im Versuchsturm hergestellt.
A* = Agglomerate hergestellt mittels marktverfügbarer Technologie (Sprühtrocknung mit integrierter Agglomeration)
V* = stabilstes Agglomerate in vergleichbare Größe, hergestellt nach dem Verfahren der Sprühgranulation.

**Tabelle 3**

| Abriebtest mittels Friabilator | | | | |
|---|---|---|---|---|
| **Agglomerat** | | **Dichtemessung** | | |
| | | **d(0,1)µm** | **d(0,5)µm** | **d(0,9)µm** |
| | | 96 | 388 | 952 |
| 1 | Abrieb | 84 | 266 | 703 |
| | | 127 | 397 | 856 |
| 2 | Abrieb | 126 | 380 | 788 |
| | | 177 | 758 | 1443 |
| 3 | Abrieb | 156 | 610 | 1316 |
| | | 266 | 651 | 1288 |
| 4 | Abrieb | 147 | 377 | 862 |
| | | 270 | 509 | 910 |
| 5 | Abrieb | 180 | 401 | 747 |
| | | 120 | 418 | 1130 |
| 6 | Abrieb | 104 | 309 | 798 |
| | | 131 | 362 | 745 |
| 7 | Abrieb | 122 | 309 | 629 |
| | | 420 | 580 | 799 |
| 8 | Abrieb | 395 | 536 | 732 |
| | | 42 | 146 | 308 |
| 9 | Abrieb | 42 | 146 | 308 |
| | | 462 | 633 | 869 |
| 10 | Abrieb | 419 | 574 | 782 |

### Klimatest im Klimaschrank

Trockenaromen basieren meist auf zuckerhaltigen Matrices. Diese sind aufgrund ihrer Hygroskopizität empfindlich gegenüber Temperatur in Kombination mit Luftfeuchtigkeit. Da diese Aromen aber während ihres Verarbeitungsprozesses und in Applikationen häufig einem derartigen physikalischen Stress ausgesetzt sind, müssen sie während der Entwicklungsphase schon auf dessen Verträglichkeit hin getestet werden.

So wird z.B. ein mit Trockenaroma vermischter Tee nur in einer Pappverpackung i.d.R. in der Küche gelagert und erfährt währenddessen regelmäßig relativ hohe Luftfeuchtigkeit bei Raumtemperatur. Zudem werden Trockenaromen in die ganze Welt verkauft und sollen auch in anderen Klimazonen eine bestimmte Mindestqualität und - Stabilität gegenüber den dort herrschenden Temperaturen und Luftfeuchtigkeit erfüllen. Diese Situation soll die Lagerung im Klimaschrank bei einer erhöhten Luftfeuchtigkeit und erhöhter Temperatur simulieren. Die Ergebnisse sind in der folgenden **Tabelle 4** wiedergegeben:

**Tabelle 4**

| Ergebnisses des Klimatests im Klimaschrank | | | | | | | |
|---|---|---|---|---|---|---|---|
| **Einwaage** | **3,0 g** | | | | | | |
| **Zeitraum** | **0h** | **5h** | **24h** | **29h** | **48h** | **120h** | **144h** |
| **Agglomerat** | | | | | | | |
| Zitrone | 3,0 | 3,0 | 3,0 | 3,0 | 3,0 | 3,01 | 3,01 |
| Zitrone V* | 3,0 | 3,02 | 3,08 | 3,09 | 3,1 | 3,11 | 3,11 |
| Bergamotte | 3,0 | 3,06 | 3,11 | 3,12 | 3,12 | 3,13 | 3,13 |
| Bergamotte V* | 3,0 | 3,01 | 3,03 | 3,03 | 3,03 | 3,03 | 3,03 |
| Zimt | 3,0 | 3,0 | 3,0 | 3,0 | 3,0 | 3,0 | 3,0 |
| Zimt V* | 3,0 | 3,0 | 3,03 | 3,03 | 3,05 | 3,05 | 3,06 |
| Erdbeer | 3,0 | 3,0 | 3,0 | 3,0 | 3,0 | 3,0 | 3,0 |
| Erdbeer V* | 3,0 | 3,03 | 3,09 | 3,09 | 3,1 | 3,1 | 3,1 |

Es wurden erfindungsgemäße Agglomeratpartikel, die mit den entsprechenden Aromen beladen wurden (Herstellung wie oben beschrieben) mit Agglomeratpartikeln, die mittels Sprühtrocknung nach dem Standardverfahren (V*) verglichen.

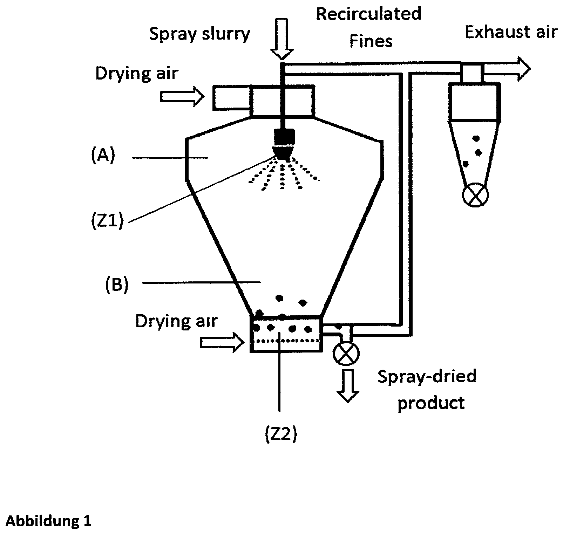

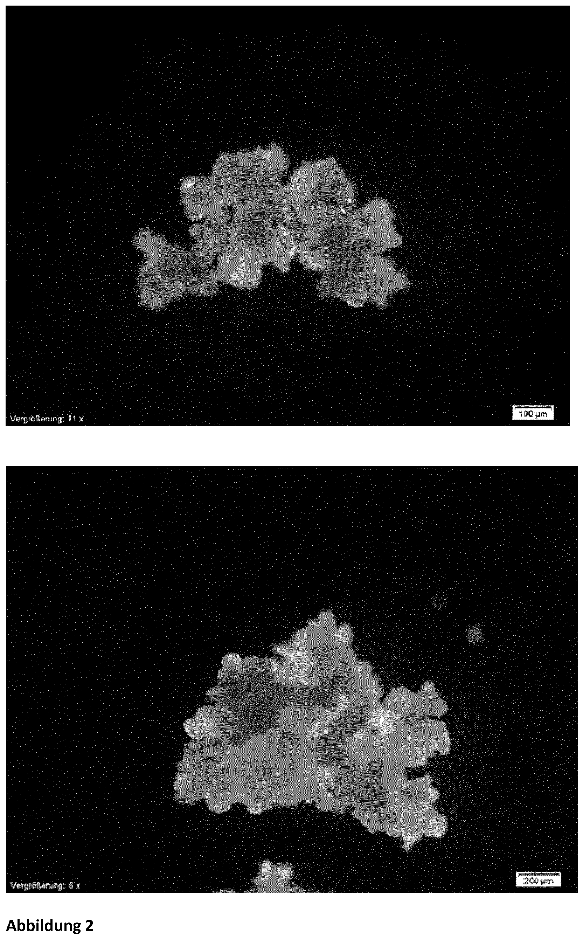

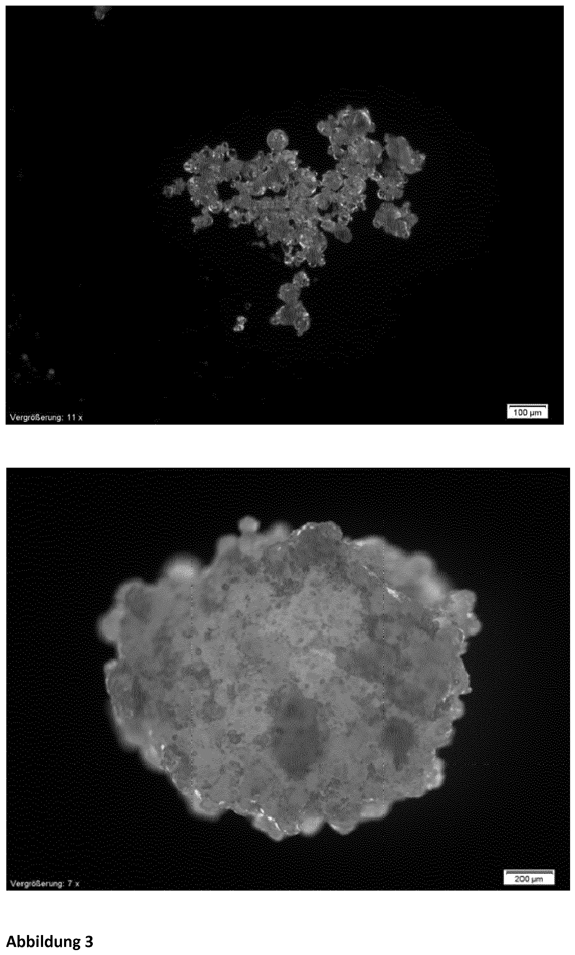

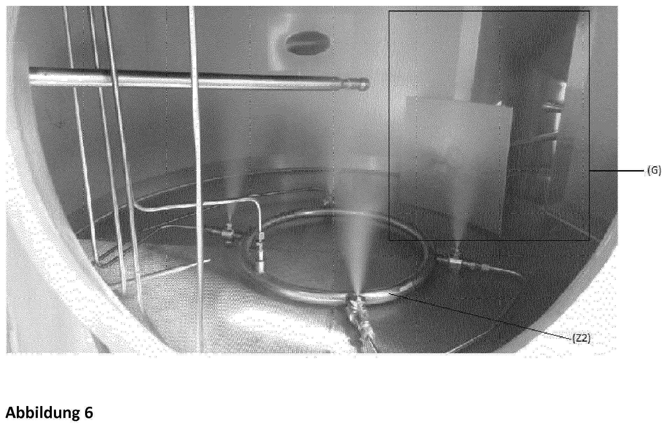

Die Erfindung wird des Weiteren durch die folgenden **Abbildungen 1 bis 6** illustriert:
- Abbildung 1:: Agglomeration-Sprühtrocknungs-Vorrichtung
- Abbildung 2:: Agglomerat Partikel mit Mango-Aroma: Standard (oben), erfindungsgemäß (unten)
- Abbildung 3:: Agglomerat Partikel mit Schokoladen-Aroma: Standard (oben), erfindungsgemäß (unten)
- Abbildung 4:: Vorrichtung mit Düsen- bzw. Zerstäuberkonstruktion (Z2) und Wehr (Verschlussklappe) (G) im Fließbett (B)
- Abbildung 5:: Anordnung der Düsen- bzw. Zerstäuberkonstruktion (Z2)
- Abbildung 6:: Anordnung der Düsen- bzw. Zerstäuberkonstruktion (Z2) im Fließbett (B) mit Wehrkonstruktion (G)

## Patentansprüche

1. Vorrichtung für die Sprühtrocknung-Agglomeration von Partikeln, wobei die Vorrichtung
(i) ein Sprühtrocknungsabschnitt (A) im oberen Bereich einer Kammer zum Trocknen von Beschickungsflüssigkeitspartikeln, die von einem Beschickungsflüssigkeitszerstäuber (Z1) gesprüht werden, aufweist,
(ii) ein integriertes Fließbett (B) im unteren Bereich der Kammer umfasst, in dem das Pulver vom Sprühtrocknungsabschnitt aus Schritt (i) mittels einer Düsen- oder Zerstäuberkonstruktion (Z2), das unten am Fließbett angebracht ist, mit einer Binderflüssigkeit besprüht wird,
(iii) eine Wehrkonstruktion (G) im Fließbett (B) umfasst, welche vor der Austrittöffnung (H) zum Zickzacksichter (P) platziert ist,
wobei die Partikel während der Herstellung ständig in Bewegung gehalten und aufgewirbelt werden und die Vorrichtung so konfiguriert ist, dass bei der Agglomeration entstehender Feinstaub im Sprühtrocknungs-Agglomerationsapparat durch den Zickzacksichter (P) in den Agglomerationsprozess zurückgeführt wird.

2. Vorrichtung nach Anspruch 1, wobei die Düsen- oder Zerstäuberkonstruktion (Z2) im internen Fließbett (B), aus einer Ringleitung besteht, wobei entlang der Ringleitung in gleichmäßigen Abständen Düsen oder Zerstäuber platziert sind.

3. Vorrichtung nach Anspruch 1 oder 2, wobei die Düsen- oder Zerstäuberkonstruktion (Z2) mindestens 3 Düsen- oder Zerstäuber umfasst.

4. Vorrichtung nach einem der vorhergehenden Ansprüchen 1 bis 3, wobei die Düsen- oder Zerstäuberkonstruktion (Z2) mindestens 4 Düsen- oder Zerstäuber umfasst.

5. Vorrichtung nach einem der vorhergehenden Ansprüche 1 bis 4, **dadurch gekennzeichnet, dass** die Binderflüssigkeit aus der Düsen- oder Zerstäuberkonstruktion (Z2) im internen Fließbett von unten nach oben versprüht wird.

6. Vorrichtung nach einem der vorhergehenden Ansprüche 1 bis 5, **dadurch gekennzeichnet, dass** die Düsen- oder Zerstäuber bei der Düsen- oder Zerstäuberkonstruktion (Z2) eine Drucksprühdüse ist.

7. Vorrichtung nach einem der vorhergehenden Ansprüche 1 bis 6, **dadurch gekennzeichnet, dass** die Düsen- oder Zerstäuber bei der Düsen- oder Zerstäuberkonstruktion (Z2) eine Zweifluid-Sprühdüse ist.

8. Verfahren zur Herstellung von Partikeln mit einer Partikelgröße über 200 µm durch kombinierte Sprühtrocknung und Agglomeration unter Einsatz einer Vorrichtung nach mindestens einem der Ansprüche 1 bis 7.

9. Verfahren nach Anspruch 8, **dadurch gekennzeichnet, dass** die Eingangstemperatur am Zerstäuber (Z1) zwischen 100°C bis 220°C, die Ausgangstemperatur am Zickzacksichter (P) 20 °C bis 100°C beträgt, wobei der Durchsatz an zu versprühendem Ausgangsstoff im Bereich von 300 bis 1200 kg/Stunde liegt, und mit 30 bis 200 bar zerstäubt wird.

10. Verfahren nach den Ansprüchen 8 und 9, **dadurch gekennzeichnet, dass** die Temperatur im Fließbett während der Agglomeration zwischen 5 bis 90°C beträgt.

## Claims

1. A device for the spray-drying agglomeration of particles, comprising
(i) in an upper region of a chamber a spray drying segment (A) for drying feed liquid particles, which are sprayed by a feed liquid atomizer (Z1),
(ii) in a lower region of the chamber an integrated fluidized bed (B), in which the powder from the spray drying segment from step (i) is sprayed with a binder liquid by means of a nozzle or atomizer construction (Z2) which is attached to the bottom of the fluidized bed,
(iii) a dam construction (G) in the fluidized bed (B), which is located in front of the outlet port (H) to a zigzag classifier (P),
wherein the particles are constantly kept in motion and whirled up during manufacture and the device is configured such that fine dust arising in the agglomeration is returned to the agglomeration process in the spray drying agglomeration device by the zigzag classifier (P).

2. The device of Claim 1, wherein the nozzle or atomizer construction (Z2) in the internal fluidized bed (B) consists of a ring line, the nozzles or atomizers being evenly spaced along the ring line.

3. The device of Claim 1 or 2, wherein the nozzle or atomizer construction (Z2) comprises at least 3 nozzles or atomizers.

4. The device according to one of the preceding claims 1 to 3, wherein the nozzle or atomizer construction (Z2) comprises at least 4 nozzles or atomizers.

5. The device according to one of the preceding claims 1 to 4, **characterized in that** the binder liquid from the nozzle or atomizer construction (Z2) in the internal fluidized bed is sprayed from the bottom to the top.

6. The device according to one of the preceding claims 1 to 5, **characterized in that** the nozzles or atomizers in the nozzle or atomizer construction (Z2) are pressure-spray nozzles.

7. The device according to one of the preceding claims 1 to 6, **characterized in that** the nozzles or atomizers in the nozzle or atomizer construction (Z2) are a twin-fluid spray nozzle.

8. Method for the production of particles with a particle size above 200 µm by combined spray drying and agglomeration using a device according to at least one of Claims 1 to 7.

9. The method according to claim 8, **characterized in that** the inlet temperature at the atomizer (Z1) is between 100° C to 220° C, the outlet temperature at the zigzag classifier (P) is 20° C to 100° C, wherein the throughput of starting material to be sprayed is in the range of 300 to 1200 kg / hour, and is atomized at 30 to 200 bar.

10. The method according to claims 8 and 9, **characterized in that** the temperature in the fluidized bed during the agglomeration is between 5 to 90 ° C.

## Revendications

1. Dispositif d'agglomération et de séchage par pulvérisation de particules, le dispositif comportant
(i) a une section de séchage par pulvérisation (A) dans la zone supérieure d'une chambre pour sécher des particules de liquide d'alimentation qui sont pulvérisées par un atomiseur de liquide d'alimentation (Z1),
(ii) un lit fluidisé intégré (B) dans la zone inférieure de la chambre dans laquelle la poudre est pulvérisée de la section de séchage par pulvérisation de l'étape (i) avec un liquide liant au moyen d'une structure de buses ou d'atomiseurs (Z2) qui est fixée en bas sur le lit fluidisé,
(iii) une structure de déversoir (G) dans le lit fluidisé (B) qui est placée devant l'ouverture de sortie (H) donnant sur le tamis en zigzag (P),
les particules étant constamment maintenues en mouvement et tourbillonnées pendant la fabrication et le dispositif étant conçu de telle sorte que les fines poussières produites lors de l'agglomération dans l'appareil d'agglomération et de séchage par pulvérisation soient renvoyées au processus d'agglomération par le tamis en zigzag (P).

2. Dispositif selon la revendication 1, la structure de buses ou d'atomiseurs (Z2) dans le lit fluidisé intérieur (B) comprenant une conduite annulaire, des buses ou des atomiseurs étant placés à intervalles réguliers le long de la conduite annulaire.

3. Dispositif selon la revendication 1 ou 2, la structure de buses ou d'atomiseurs (Z2) comprenant au moins 3 buses ou atomiseurs.

4. Dispositif selon l'une des revendications 1 à 3 précédentes, la structure de buses ou d'atomiseurs (Z2) comprenant au moins 4 buses ou atomiseurs.

5. Dispositif selon l'une des revendications 1 à 4 précédentes, **caractérisé en ce que** le liquide liant est pulvérisé de bas en haut de la structure de buses ou d'atomiseurs (Z2) dans le lit fluidisé intérieur.

6. Dispositif selon l'une des revendications 1 à 5 précédentes, **caractérisé en ce que** les buses ou atomiseurs dans la structure de buses ou d'atomiseurs (Z2) sont une buse de pulvérisation sous pression.

7. Dispositif selon l'une des revendications 1 à 6 précédentes, **caractérisé en ce que** les buses ou atomiseurs dans la structure de buses ou d'atomiseurs (Z2) sont une buse de pulvérisation à deux fluides.

8. Procédé de production de particules de granulométrie supérieure à 200 µm par séchage par pulvérisation et agglomération combinées à l'aide d'un dispositif selon l'une au moins des revendications 1 à 7.

9. Procédé selon la revendication 8, **caractérisé en ce que** la température d'entrée au niveau de l'atomiseur (Z1) est comprise entre 100 °C et 220 °C, la température de sortie au niveau du tamis en zigzag (P) est comprise entre 20 °C et 100 °C, le débit de matière de départ à pulvériser est de l'ordre de 300 à 1200 kg/heure, et est atomisé à 30 à 200 bar.

10. Procédé selon les revendications 8 et 9, **caractérisé en ce que** la température dans le lit fluidisé lors de l'agglomération est comprise entre 5 et 90 °C.
